# EUROPEAN PATENT SPECIFICATION

(11) **EP 4 367 152 B1**
(45) Date of publication and mention of the grant of the patent: **06.08.2025**
(21) Application number: 22738640.6
(22) Date of filing: 29.06.2022
(51) Int. Cl.: C08G 18/08, C08G 18/73, C08G 18/78, C08G 18/79, C08G 18/28

(54) **POLYISOCYANATE-CONTAINING FORMULATIONS**
POLYISOCYANAT-HALTIGE FORMULIERUNGEN
FORMULATIONS CONTENANT UN POLYISOCYANATE

(30) Priority: 08.07.2021 EP 21184530
(43) Date of publication of application: 15.05.2024
(73) Proprietor: BASF SE, 67056 Ludwigshafen am Rhein (DE)
(72) Inventor: LUCAS, Frederic, 67056 Ludwigshafen (DE); SCHAEFER, Harald, 67056 Ludwigshafen (DE)
(74) Representative: BASF IP Association
(86) International application number: PCT/EP2022/067843
(87) International publication number: WO 2023/280648

(56) References cited:
- EP-A1- 3 190 132
- CN-A- 111 978 509
- US-A1- 2010 273 938

## Description

The present invention relates to low-viscous preparations of polyisocyanate compounds in solvents, and to their use.

Preparations of polyisocyanates, isocyanurates for example, are already well established and are available in the form of numerous commercial products from a variety of manufacturers.

Since polyisocyanates frequently have a high viscosity or are even solid at room temperature, it is common to add a solvent to polyisocyanate preparations of this kind (see for instance US 2010/273938 A1, EP 3 190 132 A1 or CN 111 978 509 A).

Widespread solvents include butyl acetate, ethyl acetate, methoxypropyl acetate, toluene, xylene, fluorinated aromatics, aliphatic and aromatic hydrocarbon mixtures and mixtures thereof. The latter are sold for example under the trade names Solvesso^{®} from ExxonMobil, Hydrosol^{®} from Kemetyl or Shellsol^{®} from Shell, or under the designations solvent naphtha, Kristalloel, white spirit, heavy benzine, etc., in different and varying compositions.

The purpose of blending polyisocyanates with solvents is to dissolve high-viscosity or solid polyisocyanates and to provide polyisocyanate preparations in as low-viscosity a form as possible. The purpose of this is, for example, to improve miscibility and processibility, especially of solid polyisocyanates and those of relatively high viscosity, but also to enhance the surface quality of coatings.

It was an object of the present invention to provide polyisocyanate preparations which have a particularly low viscosity.

This object has been achieved by means of mixtures comprising
- (A) at least one polyisocyanate obtainable by reacting at least one monomeric isocyanate
- (B) p-cymene,
- (C) optionally at least one further solvent other than (B),
- (D) optionally at least one Lewis-acidic organic metal compound capable of accelerating the reaction of isocyanate groups with isocyanate-reactive groups, and
- (E) optionally other coatings additives

It has been found that such mixtures exhibit a significantly lower viscosity than mixtures containing the same amount of (A) and solvents other than (B).

The mixtures of the invention comprising at least one polyisocyanate obtainable by reacting at least one monomeric isocyanate (A).

The monomeric isocyanates used may be aromatic, aliphatic, or cycloaliphatic, preferably aliphatic or cycloaliphatic, which is referred to for short in this text as (cyclo)aliphatic; aliphatic isocyanates are particularly preferred.

Aromatic isocyanates are those which comprise at least one aromatic ring system, in other words not only purely aromatic compounds but also araliphatic compounds.

Cycloaliphatic isocyanates are those which comprise at least one cycloaliphatic ring system.

Aliphatic isocyanates are those which comprise exclusively linear or branched chains, i.e., acyclic compounds.

The monomeric isocyanates are preferably diisocyanates, which carry precisely two isocyanate groups. They can, however, in principle also be monoisocyanates, having one isocyanate group.

In principle, higher isocyanates having on average more than 2 isocyanate groups are also possible. Suitability therefor is possessed for example by triisocyanates, such as triisocyanatononane, 2'-isocyanatoethyl 2,6-diisocyanatohexanoate, 2,4,6-triisocyanatotoluene, triphenylmethane triisocyanate or 2,4,4'-triisocyanatodiphenyl ether, or the mixtures of diisocyanates, triisocyanates, and higher polyisocyanates that are obtained, for example, by phosgenation of corresponding aniline/formaldehyde condensates and represent methylene-bridged polyphenyl polyisocyanates.

These monomeric isocyanates do not contain any substantial products of reaction of the isocyanate groups with themselves.

The monomeric isocyanates are preferably isocyanates having 4 to 20 C atoms. Examples of typical diisocyanates are aliphatic diisocyanates such as tetramethylene diisocyanate, pentamethylene-1,5-diisocyanate, hexamethylene diisocyanate (1,6-diisocyanatohexane), octamethylene diisocyanate, decamethylene diisocyanate, dodecamethylene diisocyanate, tetradecamethylene diisocyanate, derivatives of lysine diisocyanate (e.g., methyl 2,6-diisocyanatohexanoate or ethyl 2,6-diisocyanatohexanoate), trimethylhexane diisocyanate or tetramethylhexane diisocyanate, cycloaliphatic diisocyanates such as 1,4-, 1,3- or 1,2-diisocyanatocyclohexane, 4,4'- or 2,4'-di(isocyanatocyclohexyl)methane, 1-isocyanato-3,3,5-trimethyl-5-(isocyanatomethyl)cyclohexane (isophorone diisocyanate), 1,3- or 1,4-bis(isocyanatomethyl)cyclohexane or 2,4-, or 2,6-diisocyanato-1-methylcyclohexane, and also 3 (or 4), 8 (or 9)-bis(isocyanatomethyl)tricyclo-[5.2.1.0^{2,6}]decane isomer mixtures, and also aromatic diisocyanates such as tolylene 2,4- or 2,6-diisocyanate and the isomer mixtures thereof, m- or p-xylylene diisocyanate, 2,4'- or 4,4'-diisocyanatodiphenylmethane and the isomer mixtures thereof, phenylene 1,3- or 1,4-diisocyanate, 1-chlorophenylene 2,4-diisocyanate, naphthylene 1,5-diisocyanate, diphenylene 4,4'-diisocyanate, 4,4'-diisocyanato-3,3'-dimethylbiphenyl, 3-methyldiphenylmethane 4,4'-diisocyanate, tetramethylxylylene diisocyanate, 1,4-diisocyanatobenzene or diphenyl ether 4,4'-diisocyanate.

Particular preference is given to hexamethylene-1,6-diisocyanate, 1,3-bis(isocyanatomethyl)cyclohexane, isophorone diisocyanate, pentamethylene-1,5-diisocyanate and 4,4'- or 2,4'-di(isocyanatocyclohexyl)methane, very particular preference to isophorone diisocyanate and hexamethylene-1,6-diisocyanate, and especial preference to hexamethylene-1,6-diisocyanate.

Mixtures of said isocyanates may also be present.

Isophorone diisocyanate is usually in the form of a mixture, specifically a mixture of the cis and trans isomers, generally in a proportion of about 60:40 to 90:10 (w/w), preferably of 70:30-90:10.

Dicyclohexylmethane 4,4'-diisocyanate may likewise be in the form of a mixture of the different cis and trans isomers.

For the present invention it is possible to use not only those diisocyanates obtained by phosgenating the corresponding amines but also those prepared without the use of phosgene, i.e., by phosgene-free processes. According to EP-A-0 126 299 (US 4 596 678), EP-A-126 300 (US 4 596 679), and EP-A-355 443 (US 5 087 739), for example, (cyclo)aliphatic diisocyanates, such as hexamethylene 1,6-diisocyanate (HDI), isomeric aliphatic diisocyanates having 6 carbon atoms in the alkylene radical, 4,4'- or 2,4'-di(isocyanatocyclohexyl)methane, and 1-isocyanato-3-isocyanatomethyl-3,5,5-trimethylcyclohexane (isophorone diisocyanate or IPDI) can be prepared by reacting the (cyclo)aliphatic diamines with, for example, urea and alcohols to give (cyclo)aliphatic biscarbamic esters and subjecting said esters to thermal cleavage into the corresponding diisocyanates and alcohols. The synthesis takes place usually continuously in a circulation process and optionally in the presence of N-unsubstituted carbamic esters, dialkyl carbonates, and other by-products recycled from the reaction process. Diisocyanates obtained in this way generally contain only a very low or even unmeasurable fraction of chlorinated compounds, which is advantageous, for example, in applications in the electronics industry.

In one embodiment of the present invention the isocyanates used have a hydrolyzable chlorine content of less than 100 ppm, preferably of less than 50 ppm, in particular less than 30 ppm, and especially less than 20 ppm. This can be measured by means, for example, of ASTM specification D4663-98. The total chlorine contents are, for example below 1000 ppm, preferably below 800 ppm, and more preferably below 500 ppm (determined by argentometric titration after hydrolysis).

It will be appreciated that it is also possible to employ mixtures of those monomeric isocyanates which have been obtained by reacting the (cyclo)aliphatic diamines with, for example, urea and alcohols and cleaving the resulting (cyclo)aliphatic biscarbamic esters, with those diisocyanates which have been obtained by phosgenating the corresponding amines.

The polyisocyanates (A) which can be formed by oligomerizing the monomeric isocyanates are generally characterized as follows:
The average NCO functionality of such compounds is in general at least 1.8 and can be up to 8, preferably 2 to 5, and more preferably 2.4 to 4.

The isocyanate group content after oligomerization, calculated as NCO = 42 g/mol, is generally from 5% to 25% by weight unless otherwise specified.

The polyisocyanates (A) are preferably compounds as follows:
1) Polyisocyanates containing isocyanurate groups, of aromatic, aliphatic and/or cycloaliphatic diisocyanates. Particular preference is given in this context to the corresponding aliphatic and/or cycloaliphatic isocyanatoisocyanurates and in particular to those based on hexamethylene diisocyanate and isophorone diisocyanate. The isocyanurates present are, in particular, trisisocyanatoalkyl and/or trisisocyanatocycloalkyl isocyanurates, which constitute cyclic trimers of the diisocyanates, or are mixtures with their higher homologs containing more than one isocyanurate ring. The isocyanatoisocyanurates generally have an NCO content of 10% to 30% by weight, in particular 15% to 25% by weight, and an average NCO functionality of 2.6 to 8.
   The polyisocyanates containing isocyanurate groups may to a relatively minor degree also contain urethane groups and/or allophanate groups, preferably with a bound alcohol content of less than 2%, based on the polyisocyanate, uretdione or asymmetric isocyanurate (iminooxadiazinedione).
2) Polyisocyanates containing uretdione groups and having aromatically, aliphatically and/or cycloaliphatically attached isocyanate groups, preferably aliphatically and/or cycloaliphatically attached, and in particular those derived from hexamethylene diisocyanate or isophorone diisocyanate. Uretdione diisocyanates are cyclic dimerization products of diisocyanates.
   The polyisocyanates containing uretdione groups are obtained often as a mixture with other polyisocyanates, more particularly those specified under 1). Polyisocyanates containing uretdione groups typically have functionalities of 2 to 3.
   This also includes uretdione/isocyanurate mixtures of any desired composition, more particularly those having a monomeric uretdione (dimer) content of 1-40%, more particularly 3-15%, more particularly 5-10%.
   For this purpose the diisocyanates can be reacted under reaction conditions under which not only uretdione groups but also the other polyisocyanates are formed, or the uretdione groups are formed first of all and are subsequently reacted to give the other polyisocyanates, or the diisocyanates are first reacted to give the other polyisocyanates, which are subsequently reacted to give products containing uretdione groups.
3) Polyisocyanates containing biuret groups and having aromatically, cycloaliphatically or aliphatically attached, preferably cycloaliphatically or aliphatically attached, isocyanate groups, especially tris(6-isocyanatohexyl)biuret or its mixtures with its higher homologs. These polyisocyanates containing biuret groups generally have an NCO content of 18% to 24% by weight and an average NCO functionality of 2.8 to 6.
4) Polyisocyanates containing urethane and/or allophanate groups and having aromatically, aliphatically or cycloaliphatically attached, preferably aliphatically or cycloaliphatically attached, isocyanate groups, such as may be obtained, for example, by reacting excess amounts of diisocyanate, such as of hexamethylene diisocyanate or of isophorone diisocyanate, with mono- or polyhydric alcohols. These polyisocyanates containing urethane and/or allophanate groups generally have an NCO content of 12% to 24% by weight and an average NCO functionality of 2.0 to 4.5. Polyisocyanates of this kind containing urethane and/or allophanate groups may be prepared without catalyst or, preferably, in the presence of catalysts, such as ammonium carboxylates or ammonium hydroxides, for example, or allophanatization catalysts, e.g., bismuth, cobalt, cesium, Zn(ll) or Zr(IV) compounds, for example, in each case in the presence of monohydric, dihydric or polyhydric, preferably monohydric, alcohols. These polyisocyanates containing urethane groups and/or allophanate groups occur frequently in mixed forms with the polyisocyanates specified under 1).
5) Polyisocyanates comprising oxadiazinetrione groups, derived preferably from hexamethylene diisocyanate or isophorone diisocyanate. Polyisocyanates of this kind comprising oxadiazinetrione groups are accessible from diisocyanate and carbon dioxide.
6) Polyisocyanates comprising iminooxadiazinedione groups, derived preferably from hexamethylene diisocyanate or isophorone diisocyanate. Polyisocyanates of this kind comprising iminooxadiazinedione groups are preparable from diisocyanates by means of specific catalysts. These polyisocyanates usually occur in mixture with isocyanurate as further major component.
7) Uretonimine-modified polyisocyanates.
8) Carbodiimide-modified polyisocyanates.
9) Hyperbranched polyisocyanates, of the kind known for example from DE-A1 10013186 or DE-A1 10013187.
10) Polyurethane-polyisocyanate prepolymers, from di- and/or polyisocyanates with alcohols.
11) Polyurea-polyisocyanate prepolymers.
12) The polyisocyanates 1)-11), preferably 1), 3), 4), and 6), can be converted, following their preparation, into polyisocyanates containing biuret groups or urethane/allophanate groups and having aromatically, cycloaliphatically or aliphatically attached, preferably (cyclo)aliphatically attached, isocyanate groups. The formation of biuret groups is accomplished, for example, by addition of water or by reaction with amines. The formation of urethane and/or allophanate groups is accomplished by reaction with monohydric, dihydric or polyhydric, preferably monohydric, alcohols, optionally in the presence of suitable catalysts. These polyisocyanates containing biuret or urethane/allophanate groups generally have an NCO content of 10% to 25% by weight and an average NCO functionality of 3 to 8.
13) Hydrophilically modified polyisocyanates, i.e., polyisocyanates which as well as the groups described under 1-12 also comprise groups which result formally from addition of molecules containing NCO-reactive groups and hydrophilizing groups to the isocyanate groups of the above molecules. The latter groups are non-ionic groups such as alkylpolyethylene oxide and/or ionic groups derived from phosphoric acid, phosphonic acid, sulfuric acid or sulfonic acid, and/or their salts.
14) Modified polyisocyanates for dual cure applications, i.e., polyisocyanates which as well as the groups described under 1-11 also comprise groups resulting formally from addition of molecules containing NCO-reactive groups and UV-crosslinkable or actinic-radiation-crosslinkable groups to the isocyanate groups of the above molecules. These molecules are, for example, hydroxyalkyl (meth)acrylates and other hydroxy-vinyl compounds.

The diisocyanates or polyisocyanates recited above may also be present at least partly in blocked form.

Classes of compounds used for blocking are described in D.A. Wicks, Z.W. Wicks, Progress in Organic Coatings, 36, 148-172 (1999), 41, 1-83 (2001), and also 43, 131-140 (2001).

Examples of classes of compounds used for blocking are phenols, imidazoles, triazoles, pyrazoles, oximes, N-hydroxyimides, hydroxybenzoic esters, secondary amines, lactams, CH-acidic cyclic ketones, malonic esters or alkyl acetoacetates.

In one preferred embodiment of the present invention the polyisocyanate is selected from the group consisting of isocyanurates, biurets and asymmetric isocyanurates, more preferably biurets and asymmetric isocyanurates.

In one particularly preferred embodiment the polyisocyanate encompasses polyisocyanates comprising isocyanurates, biuret and/or asymmetric isocyanurate groups, more preferably biurets and asymmetric isocyanurates and obtained from hexamethylene 1,6-diisocyanate.

In one further preferred embodiment the polyisocyanate encompasses a mixture of polyisocyanates comprising biuret and/or asymmetric isocyanurate groups and obtained very preferably from hexamethylene 1,6-diisocyanate and from isophorone diisocyanate.

In this specification, unless noted otherwise, the viscosity is reported at 23°C in accordance with DIN EN ISO 3219/A.3 in a cone/plate system with a shear rate of 1000 s⁻¹.

The process for preparing the polyisocyanates may take place as described in WO 2008/68198, especially from page 20 line 21 to page 27 line 15 therein, which is hereby made part of the present specification by reference.

The reaction can be discontinued, for example, as described therein from page 31 line 19 to page 31 line 31, and working up may take place as described therein from page 31 line 33 to page 32 line 40, which in each case is hereby made part of the present specification by reference.

The reaction can alternatively and preferably be affected as described in WO 2005/087828 for ammonium alpha-hydroxycarboxylate catalysts. Express reference is hereby made to the ammonium α-hydroxycarboxylates described in WO 2005/87828 at page 3 line 29 to page 6 line 7.

Particular preference is given to ammonium cations of tetraoctylammonium, tetramethylammonium, tetraethylammonium, tetra-n-butylammonium, trimethylbenzylammonium, triethylbenzylammonium, tri-n-butylbenzylammonium, trimethylethylammonium, tri-n-butylethylammonium, triethylmethylammonium, tri-n-butylmethylammonium, diisopropyldiethylammonium, diisopropylethylmethylammonium, diisopropylethylbenzylammonium, N,N-dimethylpiperidinium, N,N-dimethylmorpholinium, N,N-dimethylpiperazinium or N-methyldiazabicyclo[2.2.2]octane. Preferred alkyl ammonium ions are tetraoctylammonium, tetramethylammonium, tetraethylammonium, and tetra-n-butylammonium, more preferably tetramethylammonium and tetraethylammonium, and very preferably tetramethylammonium and benzyltrimethylammonium.

Particular preference is given to α-hydroxycarboxylates of glycolic acid (hydroxyacetic acid), lactic acid, citric acid, 2-methyllactic acid (α-hydroxyisobutyric acid), 2-hydroxy-2-methylbutyric acid, 2-hydroxy-2-ethylbutyric acid, 2-hydroxy-3-methylbutyric acid, 2-hydroxycaproic acid, maleic acid, tartaric acid, glucuronic acid, gluconic acid, citramalic acid, saccharic acid, ribonic acid, benzylic acid, china acid, mandelic acid, hexahydromandelic acid, 2-hydroxycaproic acid or 3-phenyllactic acid. Preferred α-hydroxycarboxylates are lactic acid, 2-methyllactic acid, (α-hydroxyisobutyric acid), 2-hydroxy-2-methylbutyric acid, and 2-hydroxycaproic acid, more preferably lactic acid, 2-methyllactic acid (α-hydroxyisobutyric acid), and 2-hydroxycaproic acid, and very preferably α-hydroxyisobutyric acid and lactic acid.

The reaction may be discontinued for example as described therein from page 11 line 12 to page 12 line 5, hereby made part of the present specification by reference.

The reaction may alternatively take place as described in CN 10178994A or CN 101805304.

In the case of thermally labile catalysts it is also possible, furthermore, to terminate the reaction by heating of the reaction mixture to a temperature above at least 80°C, preferably at least 100°C, more preferably at least 120°C.

In the case both of thermally non-labile catalysts and of thermally labile catalysts, the possibility exists of terminating the reaction at relatively low temperatures by addition of deactivators. Deactivators can also be added stoichiometrically in deficit to the catalyst, if the catalyst is at least partly thermally destroyed or the product is stable in viscosity on subsequent storage (e.g., undergoes no more than a threefold increase in viscosity on storage of the 100% form over 10 weeks at 80°C under nitrogen). Examples of suitable deactivators are hydrogen chloride, phosphoric acid, organic phosphates, such as dibutyl phosphate or diethylhexyl phosphate, phosphonates such as dioctyl phosphonate, and carbamates such as hydroxyalkyl carbamate. Dibutyl or diethylhexyl phosphate is preferred.

These compounds are added neat or diluted in a suitable concentration as necessary to discontinue the reaction. Examples of suitable solvents are the monomer, alcohols such as ethylhexanol or methyl glycol, or polar, aprotic solvents such as propylene carbonate.

The amount of the isocyanate component (A) in the mixture of the invention can be in general up to 98% by weight, based on the sum of polyisocyanate and solvent, preferably up to 95%, more preferably up to 90%.

The amount of the isocyanate component (A) in the mixture of the invention is in general 50% by weight or more, based on the sum of polyisocyanate and solvent, preferably 60% by weight or more, more preferably 70% by weight or more, and very preferably 80% by weight or more.

Solvent used for the isocyanate preparations of the invention is p-cymene.

The amount of p-cymene in the mixture of the invention can be in general up to 50% by weight, based on the sum of polyisocyanate and solvent, preferably up to 40%, more preferably up to 30%, even more preferably up to 20%.

The amount of p-cymene in the mixture of the invention is in general 2% by weight or more, based on the sum of polyisocyanate and solvent, preferably 5% by weight or more and more preferably 10% by weight or more.

The present invention further provides p-cymene with a ¹⁴C : ¹²C isotope ratio of from 0.5 × 10⁻¹² to 5 × 10⁻¹², preferably from 0.5 × 10⁻¹² to 3 × 10⁻¹² and more preferably from 0.5 × 10⁻¹² to 2 × 10⁻¹². Such p-cymene is obtainable when synthesis is performed proceeding from biological material.

The advantage of such p-cymene is that it has a ¹⁴C isotope content which corresponds to natural material, whereas p-cymene which is prepared on a petrochemical basis has an unnatural content, which is generally below 0.3 × 10⁻¹², usually below 0.2 × 10⁻¹² and usually below 0.1 × 10⁻¹². Owing to its isotope content, this inventive p-cymene can then be used to synthesize compounds for use as probes for, for example, ¹⁴C studies.

A further, optional constituent of the mixtures of the invention is at least one further solvent other than (B).

Solvents which can be used for the polyisocyanate component, and also for the binder and any other components, are those which contain no groups that are reactive toward isocyanate groups or blocked isocyanate groups, and in which the polyisocyanates are soluble to an extent of at least 10%, preferably at least 25%, more preferably at least 50%, very preferably at least 75%, more particularly at least 90%, and especially at least 95% by weight.

Examples of solvents of this kind are aromatic hydrocarbons (including alkylated benzenes and naphthalenes) and/or (cyclo)aliphatic hydrocarbons and mixtures thereof, chlorinated hydrocarbons, ketones, esters, alkoxylated alkyl alkanoates, ethers, and mixtures of the solvents.

Preferred aromatic hydrocarbon mixtures are those which comprise predominantly aromatic C₇ to C₁₄ hydrocarbons and may encompass a boiling range from 110 to 300°C; particular preference is given to toluene, o-, m- or p-xylene, trimethylbenzene isomers, tetramethylbenzene isomers, ethylbenzene, cumene, tetrahydronaphthalene, and mixtures comprising them.

Examples thereof are the Solvesso^{®} products from ExxonMobil Chemical, especially Solvesso^{®} 100 (CAS No. 64742-95-6, predominantly C₉ and C₁₀ aromatics, boiling range about 154 - 178°C), 150 (boiling range about 182 - 207°C), and 200 (CAS No. 64742-94-5), and also the Shellsol^{®} products from Shell, Caromax^{®} (e.g., Caromax^{®} 18) from Petrochem Carless, and Hydrosol from DHC (e.g., as Hydrosol^{®} A 170). Hydrocarbon mixtures comprising paraffins, cycloparaffins, and aromatics are also available commercially under the names Kristalloel (for example, Kristalloel 30, boiling range about 158 - 198°C or Kristalloel 60: CAS No. 64742-82-1), white spirit (for example likewise CAS No. 64742-82-1) or solvent naphtha (light: boiling range about 155 - 180°C, heavy: boiling range about 225 - 300°C). The aromatics content of such hydrocarbon mixtures is generally more than 90%, preferably more than 95%, more preferably more than 98%, and very preferably more than 99% by weight. It may be advisable to use hydrocarbon mixtures having a particularly reduced naphthalene content.

Examples of (cyclo)aliphatic hydrocarbons include decalin, alkylated decalin, and isomer mixtures of linear or branched alkanes and/or cycloalkanes.

The amount of aliphatic hydrocarbons is generally less than 5%, preferably less than 2.5%, and more preferably less than 1% by weight.

Esters are, for example, n-butyl acetate, ethyl acetate, 1-methoxyprop-2-yl acetate, and 2-methoxyethyl acetate.

Ethers are, for example, THF, dioxane, and also the dimethyl, diethyl or di-n-butyl ethers of ethylene glycol, diethylene glycol, triethylene glycol, propylene glycol, dipropylene glycol or tripropylene glycol.

Ketones are, for example, acetone, diethyl ketone, ethyl methyl ketone, isobutyl methyl ketone, methyl amyl ketone and tert-butyl methyl ketone.

Preferred solvents are n-butyl acetate, ethyl acetate, 1-methoxyprop-2-yl acetate, 2-methoxyethyl acetate, and also mixtures thereof, more particularly with the aromatic hydrocarbon mixtures recited above, especially xylene and Solvesso^{®} 100.

Such mixtures of (B) with (C) can be present in the volume ratio of 100:1 to 1:1, preferably in a volume ratio of 100:1 to 2:1, more preferably in a volume ratio of 100:1 to 5:1 and very preferably in a volume ratio of 100:1 to 10:1.

If a solvent (C) is present then preference is given to inventive mixtures of (B) with n-butyl acetate or of (B) with 1-methoxy-2-propyl acetate or of (B) with methyl amyl ketone or of (B) with xylene or of (B) with Solvesso^{®} 100.

The amount of solvent (C) in the mixture of the invention can be in general up to 25% by weight, based on the sum of polyisocyanate and solvent, preferably up to 20%, more preferably up to 15%.

The amount of solvent (C) in the mixture of the invention is preferably 0% by weight, based on the sum of polyisocyanate and solvent.

Examples of suitable Lewis-acidic organometallic compounds (D) are tin compounds, such as tin(II) salts of organic carboxylic acids, e.g., tin(ll) diacetate, tin(ll) dioctoate, tin(II) bis(ethylhexanoate), and tin(II) dilaurate, and the dialkyltin(IV) salts of organic carboxylic acids, e.g., dimethyltin diacetate, dibutyltin diacetate, dibutyltin dibutyrate, dibutyltin bis(2-ethylhexanoate), dibutyltin dilaurate, dibutyltin maleate, dioctyltin dilaurate, and dioctyltin diacetate.

Other preferred Lewis-acidic organometallic compounds are zinc salts, example being zinc(II) diacetate and zinc(II) dioctoate.

Tin-free and zinc-free alternatives used include organometallic salts of bismuth, zirconium, titanium, aluminum, iron, manganese, nickel, and cobalt.

These are, for example, zirconium tetraacetylacetonate (e.g., K-KAT^{®} 4205 from King Industries); zirconium dionates (e.g., K-KAT^{®} XC-9213; XC-A 209 and XC-6212 from King Industries); bismuth compounds, especially tricarboxylates (e.g., K-KAT^{®} 348, XC-B221; XC-C227, XC 8203 from King Industries); aluminum dionate (e.g., K-KAT^{®} 5218 from King Industries). Tin-free and zinc-free catalysts are otherwise also offered, for example, under the trade name Borchi^{®} Kat from Borchers, TK from Goldschmidt or BICAT^{®} from Shepherd, Lausanne.

Bismuth catalysts and cobalt catalysts as well, cerium salts such as cerium octoates, and cesium salts can be used as catalysts.

Bismuth catalysts are more particularly bismuth carboxylates, especially bismuth octoates, ethylhexanoates, neodecanoates, or pivalates; examples are K-KAT 348 and XK-601 from King Industries, TIB KAT 716, 716LA, 716XLA, 718, 720, 789 from TIB Chemicals, and those from Shepherd Lausanne, and also catalyst mixtures of, for example, bismuth organyls and zinc organyls.

Further metal catalysts are described by Blank et al. in Progress in Organic Coatings, 1999, Vol. 35, pages 19-29.

These catalysts are suitable for solvent-based, water-based and/or blocked systems.

Molybdenum, tungsten, and vanadium catalysts are described more particularly for the reaction of blocked polyisocyanates in WO 2004/076519 and WO 2004/076520. Cesium salts as well can be used as catalysts. Suitable cesium salts are those compounds in which the following anions are employed: F⁻, Cl⁻, ClO⁻, ClO₃⁻, ClO₄⁻, Br⁻, I⁻, IO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻, and also (Cₙ₊₁H₂ₙ₋₂O₄)²⁻, where n stands for the numbers 1 to 20. Preferred here are cesium carboxylates in which the anion conforms to the formulae (CₙH₂ₙ₋₁O₂)⁻ and also (Cₙ₊₁H₂ₙ₋₂O₄)²⁻, with n being 1 to 20. Particularly preferred cesium salts contain monocarboxylate anions of the general formula (CₙH₂ₙ₋₁O₂)⁻, with n standing for the numbers 1 to 20. Particular preference in this context is given to formate, acetate, propionate, hexanoate, and 2-ethylhexanoate.

Preferred Lewis-acidic organometallic compounds are dimethyltin diacetate, dibutyltin dibutyrate, dibutyltin bis(2-ethylhexanoate), dibutyltin dilaurate, dioctyltin dilaurate, zinc(II) diacetate, zinc(II) dioctoate, zirconium acetylacetonate, and zirconium 2,2,6,6-tetramethyl-3,5-heptanedionate, and bismuth compounds.

Particular preference is given to dibutyltin dilaurate.

Further, typical coatings additives (E) used may be the following, for example: antioxidants, UV stabilizers such as UV absorbers and suitable free-radical scavengers (especially HALS compounds, hindered amine light stabilizers), activators (accelerators), drying agents, fillers, pigments, dyes, antistatic agents, flame retardants, thickeners, thixotropic agents, surface-active agents, viscosity modifiers, plasticizers or chelating agents. UV stabilizers are preferred.

The secondary antioxidants are preferably selected from the group consisting of phosphites, phosphonites, phosphonates, and thioethers.

Phosphites are compounds of the type P(OR^{a})(OR^{b}) (OR^{c}) with R^{a}, R^{b}, and R^{c} being identical or different, aliphatic or aromatic radicals (which may also form cyclic or spiro structures).

Preferred phosphonites are described in WO 2008/116894, particularly from page 11 line 8 to page 14 line 8 therein, hereby made part of the present disclosure content by reference.

Preferred phosphonates are described in WO 2008/116895, particularly from page 10 line 38 to page 12 line 41 therein, hereby made part of the present disclosure content by reference.

These are more particularly dialkyl phosphonates and dialkyl diphosphonates.

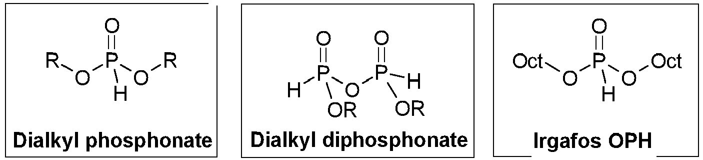

Examples thereof are mono- and di-C₁ to C₁₂ alkyl phosphonates and mixtures thereof, preferably the dialkyl phosphonates, more preferably those having C₁ to C₈ alkyl groups, very preferably having C₁ to C₈ alkyl groups, and more particularly those having C₁, C₂, C₄ or C₈ alkyl groups.

The alkyl groups in dialkyl phosphonates may be identical or different and are preferably identical.

Examples of C₁ to C₁₂ alkyl groups are methyl, ethyl, isopropyl, n-propyl, n-butyl, isobutyl, sec-butyl, tert-butyl, n-hexyl, n-heptyl, n-octyl, n-decyl, n-dodecyl, 2-ethylhexyl, and 2-propylheptyl, more particularly di-n-octyl phosphonate Irgafos^{®} OPH (see image above), and di-(2-ethylhexyl) phosphonate.

Preferred thioethers described in WO 2008/116893, particularly from page 11 line 1 to page 15 line 37 therein, hereby made part of the present disclosure content by reference.

Sterically hindered phenols may be present and have the function of a primary antioxidant. This is a term commonly used by the skilled person to refer to compounds which scavenge free radicals.

Sterically hindered phenols of this kind are described in WO 2008/116894, for example, preference being given to the compounds described therein at page 14 line 10 to page 16 line 10, hereby made part of the present disclosure content by reference.

The phenols in question are preferably those which have exactly one phenolic hydroxyl group on the aromatic ring, and more preferably those which have a substituent, preferably an alkyl group, in the ortho-positions, very preferably in ortho-positions and para-position, to the phenolic hydroxyl group, preferably contain an alkyl group, and more particularly are alkyl 3-(3,5-di-tert-butyl-4-hydroxyphenyl)propionates, or substituted alkyl derivatives of such compounds.

Phenols of this kind may also be constituents of a polyphenolic system having a plurality of phenol groups: pentaerythritol tetrakis(3-(3,5-di-tert-butyl-4-hydroxyphenyl)propionate (e.g., Irganox^{®} 1010); ethylenebis(oxyethylene) bis(3-(5-tert-butyl-4-hydroxy-m-tolyl)propionate) (e.g., Irganox 245); 3,3',3",5,5',5"-hexa-tert-butyl-a,a',a"-(mesitylene-2,4,6-triyl)tri-p-cresol (e.g., Irganox^{®} 1330); 1,3,5-tris(3,5-di-tert-butyl-4-hydroxybenzyl)-1,3,5-triazine-2,4,6(1H,3H,5H)-trione (e.g., Irganox^{®} 3114), in each case products of Ciba Spezialitätenchemie, now BASF SE.

Corresponding products are available, for example, under the trade names Irganox^{®} (BASF SE), Sumilizer^{®} from Sumitomo, Lowinox^{®} from Great Lakes, and Cyanox^{®} from Cytec.

Also possible are, for example, thiodiethylenebis[3-[3,5-di-tert-butyl-4-hydroxyphenyl]propionate] (Irganox^{®} 1035) and 6,6'-di-tert-butyl-2,2'-thiodi-p-cresol (e.g., Irganox^{®} 1081), each products of BASF SE.

Preference is given to 2,6-di-tert-butyl-4-methylphenol (BHT); isooctyl 3-(3,5-di-tert-butyl-4-hydroxyphenyl)propionate (Irganox^{®} 1135, CAS No. 146598-26-7), octadecyl 3-(3,5-di-tert-butyl-4-hydroxyphenyl)propionate (Irganox^{®} 1076, CAS No. 2082-79-3), and pentaerythritol tetrakis(3-(3,5-di-tert-butyl-4-hydroxyphenyl)propionate (CAS No. 6683-19-8; e.g., Irganox^{®} 1010).

Other primary antioxidants are, for example, secondary arylamines.

Suitable UV absorbers comprise oxanilides, triazines and benzotriazole (the latter available, for example, as Tinuvin^{®} products from BASF SE) and benzophenones (e.g., Chimassorb^{®} 81 from BASF SE). Preference is given, for example, to 95% benzenepropanoic acid, 3-(2H-benzotriazol-2-yl)-5-(1,1-dimethylethyl)-4-hydroxy-, C7-9-branched and linear alkyl esters; 5% 1-methoxy-2-propyl acetate (e.g., Tinuvin^{®} 384) and α-[3-[3-(2H-benzotriazol-2-yl)-5-(1,1-dimethylethyl)-4-hydroxyphenyl]-1-oxopropyl]-ω-hydroxypoly(oxo-1,2-ethanediyl) (e.g., Tinuvin^{®} 1130), in each case products, for example, of BASF SE. DL-alpha-Tocopherol, tocopherol, cinnamic acid derivatives, and cyanoacrylates can likewise be used for this purpose.

These can be employed alone or together with suitable free-radical scavengers, examples being sterically hindered amines (often also identified as HALS or HAS compounds; hindered amine (light) stabilizers) such as 2,2,6,6-tetramethylpiperidine, 2,6-di-tert-butylpiperidine or derivatives thereof, e.g., bis(2,2,6,6-tetramethyl-4-piperidyl) sebacate. They are obtainable, for example, as Tinuvin^{®} products and Chimassorb^{®} products from BASF SE. Preference in joint use with Lewis acids, however, is given to those hindered amines which are N-alkylated, examples being bis(1,2,2,6,6-pentamethyl-4-piperidinyl) [[3,5-bis(1,1-dimethylethyl)-4-hydroxyphenyl]methyl]butylmalonate (e.g., Tinuvin^{®} 144 from BASF SE); a mixture of bis(1,2,2,6,6-pentamethyl-4-piperidinyl)sebacate and methyl(1,2,2,6,6-pentamethyl-4-piperidinyl) sebacate (e.g., Tinuvin^{®} 292 from BASF SE); or which are N-(O-alkylated), such as, for example, decanedioic acid bis(2,2,6,6-tetramethyl-1-(octyloxy)-4-piperidinyl) ester, reaction products with 1,1-dimethylethyl hydroperoxide and octane (e.g., Tinuvin^{®} 123 from BASF SE) and especially the HALS triazine "2-aminoethanol, reaction products with cyclohexane and peroxidized N-butyl-2,2,6,6-tetramethyl-4-piperidinamine-2,4,6-trichloro-1,3,5-triazine reaction product" (e.g., Tinuvin^{®} 152 from BASF SE).

UV stabilizers are used typically in amounts of 0.1% to 5.0% by weight, based on the solid components present in the preparation.

Suitable thickeners include, in addition to free-radically (co)polymerized (co)polymers, typical organic and inorganic thickeners such as hydroxymethylcellulose or bentonite.

Chelating agents which can be used include, for example, ethylenediamineacetic acid and salts thereof and also β-diketones.

As component (F) in addition it is possible for fillers, dyes and/or pigments to be present.

Pigments in the true sense are, according to CD Römpp Chemie Lexikon - Version 1.0, Stuttgart/New York: Georg Thieme Verlag 1995, with reference to DIN 55943, particulate "colorants that are organic or inorganic, chromatic or achromatic and are virtually insoluble in the application medium".

Virtually insoluble here means a solubility at 25°C below 1 g/1000 g application medium, preferably below 0.5, more preferably below 0.25, very particularly preferably below 0.1, and in particular below 0.05 g/1000 g application medium.

Examples of pigments in the true sense comprise any desired systems of absorption pigments and/or effect pigments, preferably absorption pigments. There are no restrictions whatsoever on the number and selection of the pigment components. They may be adapted as desired to the particular requirements, such as the desired perceived color, for example, as described in step a), for example. It is possible for example for the basis to be all the pigment components of a standardized mixer system.

Effect pigments are all pigments which exhibit a platelet-shaped construction and give a surface coating specific decorative color effects. The effect pigments are, for example, all of the pigments which impart effect and can be used typically in vehicle finishing and industrial coatings. Examples of such effect pigments are pure metallic pigments, such as aluminum, iron or copper pigments; interference pigments, such as titanium dioxide-coated mica, iron oxide-coated mica, mixed oxide-coated mica (e.g., with titanium dioxide and Fe₂O₃ or titanium dioxide and Cr₂O₃), metal oxide-coated aluminum; or liquid-crystal pigments, for example.

The coloring absorption pigments are, for example, typical organic or inorganic absorption pigments that can be used in the coatings industry. Examples of organic absorption pigments are azo pigments, phthalocyanine pigments, quinacridone pigments, and pyrrolopyrrole pigments. Examples of inorganic absorption pigments are iron oxide pigments, titanium dioxide, and carbon black.

Dyes are likewise colorants and differ from the pigments in their solubility in the application medium; i.e., they have a solubility at 25°C of more than 1 g/1000 g in the application medium.

Examples of dyes are azo, azine, anthraquinone, acridine, cyanine, oxazine, polymethine, thiazine, and triarylmethane dyes. These dyes may find application as basic or cationic dyes, mordant dyes, direct dyes, disperse dyes, development dyes, vat dyes, metal complex dyes, reactive dyes, acid dyes, sulfur dyes, coupling dyes or substantive dyes.

Coloristically inert fillers are all substances/compounds which on the one hand are coloristically inactive, i.e., exhibit a low intrinsic absorption and have a refractive index similar to that of the coating medium, and which on the other hand are capable of influencing the orientation (parallel alignment) of the effect pigments in the surface coating, i.e., in the applied coating film, and also properties of the coating or of the coating compositions, such as hardness or rheology, for example. Inert substances/compounds which can be used are given by way of example below, but without restricting the concept of coloristically inert, topology-influencing fillers to these examples. Suitable inert fillers meeting the definition may be, for example, transparent or semi-transparent fillers or pigments, such as silica gels, blanc fixe, kieselguhr, talc, calcium carbonates, kaolin, barium sulfate, magnesium silicate, aluminum silicate, crystalline silicon dioxide, amorphous silica, aluminum oxide, microspheres or hollow microspheres made, for example, of glass, ceramic or polymers, with sizes of 0.1-50 µm, for example. Additionally, as inert fillers it is possible to employ any desired solid inert organic particles, such as urea-formaldehyde condensates, micronized polyolefin wax and micronized amide wax, for example. The inert fillers can in each case also be used in a mixture. It is preferred, however, to use only one filler in each case.

Preferred fillers comprise silicates, examples being silicates obtainable by hydrolysis of silicon tetrachloride, such as Aerosil^{®} from Degussa, siliceous earth, talc, aluminum silicates, magnesium silicates, calcium carbonates, etc.

The constitution of the polyisocyanate compositions of the invention is for example as follows:
(A) 50% to 98%, preferably 60% to 95%, more preferably 70-90% by weight,
(B) 2% to 50%, preferably 5% to 40%, more preferably 10-30% by weight
(C) 0% to 40%, preferably 0-30%, more preferably 0% to 20% by weight,
(D) 0 to 10 000 ppm, preferably 10 to 2000 ppm, and more preferably 50 to 1000 ppm by
   weight
(E) 0-5% additives.

Preferably the sum always makes 100% by weight.

The mixtures of the invention are generally prepared by simply mixing the isocyanate component (A) with the solvent (B) and, if appropriate, (C). Particularly in the case of viscous or solid isocyanate components (A), simple mixing may present difficulties since the commixing of the two phases may in that case be hindered.

In one preferred embodiment, therefore, isocyanate component (A) and solvent (B) and also, if appropriate, (C) are mixed with one another at a temperature of at least 10°C under a pressure above atmospheric pressure.

The temperature in this case can amount to preferably at least 15°C, more preferably at least 20°C, very preferably at least 25°C, in particular between 25°C and 30°C.

The stated temperature refers to at least one of the solvents and isocyanate component (A) to be mixed, preferably at least to the isocyanate component (A), and more preferably to both.

The temperature of the mixture during the mixing operation ought normally to be at least 10°C below the boiling temperature or below the lower limit of the boiling range, in accordance with ASTM D850, of the solvent or solvent mixture used, under the applied pressure, preferably at least 20°C, and more preferably less than 40°C.

The pressure under which the mixing operation can be carried out ought preferably to be at least 0.1 bar (10 000 Pa) above the ambient pressure, more preferably at least 0.2 bar (20 000 Pa), very preferably at least 0.3 bar (30 000 Pa), in particular at least 0.5 bar (50 000 Pa), and especially at surrounding pressure.

It is normally sufficient to carry out commixing under a superatmospheric pressure of not more than 10 bar (10⁶ Pa), preferably not more than 8 bar (800 000 Pa), and more preferably not more than 7 bar (700 000 Pa).

Advantages of a process of this kind are, firstly, that under mixing conditions of this kind, as a result of the elevated temperature, the viscosity of the isocyanate component (A) is lowered and it is therefore more readily miscible with the solvent, and, secondly, that under mixing conditions of this kind the elevated pressure hinders evaporation of the solvent.

In one preferred embodiment the isocyanate component (A) with the stated minimum temperature is introduced into the at least one solvent for the purpose of mixing. In this context it may be advantageous for the temperature of said at least one solvent to differ by not more than 40°C, preferably not more than 30°C, more preferably not more than 20°C, and very preferably not more than 10°C from the temperature of the at least one polyisocyanate.

In one particularly preferred embodiment the isocyanate component (A) is introduced in the form of a distillation bottom product into said at least one solvent. Since the polyisocyanates are prepared by conventional partial oligomerization from diisocyanates, it is necessary to separate off unreacted diisocyanate from the reaction mixture in order to obtain a monomer content of less than 1% by weight, preferably of less than 0.75%, more preferably of less than 0.5%, and very preferably of less than 0.3% by weight, and very preferably of less than 0.1% by weight. This generally takes place by distillation in conventional manner, such as by thin-film distillation, at a temperature from 90 to 220°C, advantageously under reduced pressure, and additionally, if appropriate, with an inert stripping gas passed through the system.

Apparatus employed for this purpose includes flash evaporators, falling-film evaporators, thin-film evaporators and/or short-path evaporators, surmounted if appropriate by a short column.

The distillation takes place in general under a pressure of between 0.1 and 300 hPa, preferably below 200 hPa, and more preferably below 100 hPa.

The distillation discharge can then be mixed advantageously directly with said at least one solvent. This has the advantage, moreover, that the hot, concentrated reaction mixture is diluted by its introduction into the solvent and is therefore cooled directly, which makes it possible to reduce follow-on reactions, such as further polymeric molecular enlargement, in the reaction mixture.

For the purpose of generating the mixtures an energy input into the mixing means of generally 0.2 W/kg or more is sufficient, preferably 0.5 or more W/kg, more preferably 1 or more, very preferably 2 or more, in particular 5 or more, and especially 10 W/kg or more. Generally speaking, an energy input of more than 30 W/kg affords no advantages. The specific energy input indicated should be interpreted here as the work put in per unit amount of polyisocyanate and solvent in the mixing chamber volume of the mixing means.

Within the process the mixing of the streams takes place in a suitable mixing means distinguished by very complete mixing.

The mixing means used is preferably a mixing circuit, a stirred tank, a static mixer or a pump. Static mixers which can be used include all typical static mixers (e.g., Sulzer SMX/SMV) or else nozzle or baffle mixing means, examples being coaxial mixing nozzles, Y-mixers or T-mixers.

By a mixing circuit is meant in this context a pumped circulation which comprises at least one pump and also, if appropriate, at least one heat exchanger and into which at least one of the components to be mixed, preferably the polyisocyanate, more preferably polyisocyanate and solvent, is/are metered in, preferably upstream of the pump. The pumped circulation may further comprise additional static mixers and/or mixing elements.

When a mixing circuit is used as the mixing means, one component is introduced at high velocity through nozzles. The velocities of the streams immediately prior to mixing are typically between 1 and 100 m/s, preferably between 2 and 80 m/s, more preferably between 5 and 50 m/s.

The mixing time in this mixing means is typically from 0.01 s to 120 s, preferably from 0.05 to 60 s, more preferably from 0.1 to 30 s, very preferably from 0.5 to 15 s, and in particular from 0.7 to 5 s. The mixing time is understood as the time which elapses from the beginning of the mixing operation until 97.5% of the fluid elements of the resulting mixture have a mixing fraction which, based on the theoretical final value of the mixing fraction of the resulting mixture when a state of perfect mixing has been attained, deviates by less than 2.5% from this final mixing fraction value (regarding the concept of the mixing fraction see, for example, J. Warnatz, U. Maas, R.W. Dibble: Verbrennung, Springer Verlag, Berlin Heidelberg New York, 1997, 2nd edition, p. 134).

If mixing is carried out in one or more stirred tanks, such as in 1 to 5, preferably 1 - 3, more preferably 1 - 2, and very preferably one stirred tank, or tube reactor, then the average total residence time in all stirred tanks together can be up to 7 hours, preferably up to 1.5 hours. The lower limit for the average total residence time in stirred tanks is taken in general to be 15 minutes, preferably 30 minutes. In tube reactors the residence time may for example be up to 30 minutes, preferably up to 20 minutes, more preferably up to 10 minutes, very preferably up to 5 minutes, and in particular up to 2 minutes. A longer residence time, though possible, does not in general afford any advantages.

The work in the case of stirred tanks may be put in via all possible types of stirrer, such as propeller, inclined-blade, anchor, disk, turbine or bar stirrers. Preference is given to using disk stirrers and turbine stirrers.

In a further possible embodiment, however, the commixing and the energy input in the stirred tank may also take place by means of at least one pumped circulation, which if appropriate may be thermally conditioned by means of at least one heat exchanger mounted in said pumped circulation.

The reactor may be, for example, a reactor with double-wall heating, welded-on tubes or half-tubes, and/or internal heating coils. Also possible is a reactor with an external heat exchanger with natural circulation, in which the circulation flow is brought about without mechanical auxiliary means, or forced circulation (using a pump), forced circulation being particularly preferred.

Suitable circulatory evaporators are known to the skilled worker and are described for example in R. Billet, Verdampfertechnik, HDP-Verlag, Bibliographisches Institut Mannheim, 1965, 53. Examples of circulatory evaporators are tube-bundle heat exchangers, plate-type heat exchangers, etc.

It is of course also possible for there to be two or more heat exchangers present in the circulation.

In a tube reactor it is possible, for the purpose of improved commixing, for perforated plates, slotted plates, packings or static mixers to be installed. The Bodenstein number of a tube reactor of this kind ought for example to be 3 or more, preferably at least 4, more preferably at least 5, very preferably at least 8, and in particular at least 10.

During the commixing operation the mixture may also be further heated, so that the temperature during mixing operation may be increased by up to 5°C, preferably by up to 10°C, more preferably by up to 15°C.

After the mixing operation the mixed discharge can be cooled again to ambient temperature. The discharge can be rationally used to preheat at least one of the streams which is run into the mixing stage, or for the purpose of further heating during the mixing stage.

In any streams in which an isocyanate-containing stream is conveyed, pumps used in the process are preferably forced-delivery pumps, examples being gear pumps, peristaltic pumps, screw pumps, eccentric-screw pumps, spindle pumps or piston pumps, or centrifugal pumps.

Forced-delivery pumps are used in the process preferably for conveying streams which have a viscosity of 250 mPas or more, more preferably 300 mPas or more, very preferably 400 mPas or more, and more particularly 500 mPas or more. Centrifugal pumps are employed preferably for conveying streams having a viscosity of up to 300 mPas, more preferably up to 250 mPas, and very preferably up to 200 mPas.

With very particular preference the polyisocyanate-containing stream, following removal of monomeric isocyanate, is conveyed using forced-delivery pumps, and in particular a stream of this kind is metered into the solvent.

Mixing may be practiced continuously, discontinuously or semicontinuously. This means that isocyanate component (A) and solvent are mixed with one another continuously and simultaneously in the desired proportion, or are mixed discontinuously in a separate container, or else one component, preferably the solvent, is introduced first and the other, preferably the polyisocyanate, is metered in. With particular preference the solvent is preheated - to the temperatures indicated above, for example.

The mixtures of polyisocyanates in solvents that are obtainable by the process described are stable on storage.

The obtainable mixtures of isocyanate component (A) in the solvents (B) and also, if appropriate, (C) are generally used in the coatings industry. The mixtures of the invention can be used, for example, in coating materials for 1K [one-component] or 2K [two-component] polyurethane coating materials, such as for primers, surfacers, basecoats, unpigmented topcoat materials, pigmented topcoat materials and clearcoat materials, for example, in the sectors of industrial coating, more particularly aircraft coating or large-vehicle coating, wood coating, automobile coating, more particularly automotive OEM or refinish, or decorative coating. The coating materials are especially suitable for applications requiring particularly high application reliability, outdoor weathering stability, optical qualities, solvent resistance and/or chemical resistance. In accordance with the invention, the curing of these coating materials is not important. More particularly in the automobile industry, multicoat curing regimes are on the increase, such as the curing of clearcoat and basecoat (referred to as two in one), or of surfacer, clearcoat, and basecoat (referred to as three in one).

The mixtures prepared with the process are generally in the form of solutions, but in exceptional cases may also take the form of dispersions.

ppm and percentage figures used in this specification are ppm by weight and percentages by weight, unless specified otherwise.

In this specification, unless noted otherwise, the viscosity is specified at 23°C in accordance with DIN EN ISO 3219/A.3 in a cone/plate system with a shear rate of 100 s⁻¹.

### Examples

### POLYISOCYANATES (A)

### BASONAT^{®} HI 100 (BASF SE, Ludwigshafen, Germany)

Polyisocyanate prepared by trimerizing some of the isocyanate groups of 1,6 diisocyanatohexane (HDI), and containing isocyanurate groups, and distilling of the monomer, said polyisocyanate being composed substantially of tris(6-isocyanatohexyl) isocyanurate and its higher homologs, with an NCO content of 22.2% and a viscosity at 23°C of 2800 mPa*s

### BASONAT^{®} HA 3000 (BASF SE, Ludwigshafen, Germany)

Polyisocyanate prepared by trimerizing and urethanizing / allophanatizing some of the isocyanate groups of 1,6-diisocyanatohexane (HDI) in presence of an alcohol [2-ethyl-1-hexanol], distilling of the monomer, and containing both isocyanurate and allophanate groups, with an NCO content of 19.5% and a viscosity at 23°C of 350 mPa*s.

### BASONAT^{®} HI 3000 (BASF SE, Ludwigshafen, Germany)

Polyisocyanate prepared by trimerizing some of the isocyanate groups of 1,6 diisocyanatohexane (HDI), distilling of the monomer, and containing basically both isocyanurate and iminooxadiazinedione groups, with an NCO content of 23.2% and a viscosity at 23°C of 780 mPa*s (commercially available as Basonat HI^{®} 3000 at BASF SE, Ludwigshafen, Germany)

### Tolonate^{™} HDT LV (Vencorex, France)

Polyisocyanate prepared by oligomerizing some of the isocyanate groups of 1,6-diisocyanato-hexane (HDI), distilling of the monomer, and containing basically both isocyanurate and uretdione groups, with an NCO content of 23.0% and a viscosity at 23°C of 1550 mPa*s

### BASONAT^{®} HB 100 (BASF SE, Ludwigshafen, Germany)

Polyisocyanate prepared by biuretizing some of the isocyanate groups of 1,6 diisocyanatohexane (HDI), distilling of the monomer, and said polyisocyanate containing biuret groups, with an NCO content of 21.8% and a viscosity at 23°C of 4100 mPa*s

### BASONAT^{®} HW 1000 (BASF SE, Ludwigshafen, Germany)

Waterdispersible polyisocyanate prepared by modification of an HDI-Isocyanurate with an NCO content of 17.3% and a viscosity at 23°C of 4900 mPa*s

### BASONAT^{®} HW 4000 (BASF SE, Ludwigshafen, Germany)

Waterdispersible polyisocyanate prepared by modification of an HDI-Isocyanurate with an NCO content of 18.9% and a viscosity at 23°C of 3860 mPa*s

### RESULTS

All the polyisocyanate were diluted in the aromatic solvents to obtain 90wt% solutions and mixed overnight at room temperature using a tumbling mixer The viscosities were measured at 23°C according to the DIN EN ISO 3219 using a using a rotational viscometer equipped with cone-plate geometry and a shear rate of 1000s⁻¹ :

### VISCOSITY (in mPa.s)

| **Polyisocyanate** | **p-Cymene** | **Solvesso** | **Xylene** |
|---|---|---|---|
| Basonat HI 100 | 609 | 780 | 640 |
| Basonat HA 3000 | 140 | 171 | 150 |
| Basonat HI 3000 | 230 | 311 | 260 |
| Tolonate HDT LV | 368 | 465 | 420 |
| Basonat HB 100 | 989 | 1350 | 1040 |
| Basonat HW 1000 | 1280 | 1990 | 1580 |
| Basonat HW 4000 | 1670 | 3150 | 2380 |

## Claims

1. A mixture comprising
- (A) at least one polyisocyanate obtainable by reacting at least one monomeric isocyanate,
- (B) p-cymene,
- (C) optionally at least one further solvent other than (B),
- (D) optionally at least one Lewis-acidic organic metal compound capable of accelerating the reaction of isocyanate groups with isocyanate-reactive groups and
- (E) optionally other coatings additives

2. The mixture according to claim 1, wherein the monomeric isocyanate is a diisocyanate selected from the group consisting of hexamethylene 1,6-diisocyanate, pentamethylene 1,5-diisocyanate, isophorone diisocyanate, 1,3-bis(isocyanatomethyl)cyclohexane, 4,4'-di(isocyanatocyclohexyl)methane and 2,4'-di(isocyanatocyclohexyl)methane.

3. The mixture according to either of the preceding claims, wherein the polyisocyanate (A) is a polyisocyanate containing isocyanurate groups, asymmetric isocyanurate groups, biuret (/urethane) groups, and/or allophanates,
, preferably biuret groups and/or mixtures of isocyanurates and asymmetric isocyanurates.

4. The mixture according to any of the preceding claims, wherein the polyisocyanate (A) comprises isocyanurate, urethane and/or allophanate groups prepared using an ammonium carboxylate or ammonium α-hydroxycarboxylate catalyst.

5. The mixture according to any one of the preceding claims, wherein the polyisocyanate comprises a polyisocyanate comprising (asymmetric) isocyanurate groups, having a viscosity of 600-4000 mPa*s, and/or a low-viscosity urethane and/or allophanate having a viscosity of 150-1600 mPa*s.

6. The mixture according to any one of the preceding claims, wherein the amount of component (A) in the mixture is between 50% to 98% by weight, based on the sum of polyisocyanate and solvent.

7. The mixture according to any one of the preceding claims, wherein the amount of p-cymene (B) in the mixture is between 2% and 50% by weight, based on the sum of polyisocyanate and solvent, preferably between 5% and 40%, more preferably between 10% and 30%.

8. The mixture according to any one of the preceding claims, wherein the p-cymene (B) has a ¹⁴C : ¹²C isotope ratio of from 0.5 × 10⁻¹² to 5 × 10⁻¹².

9. The mixture according to any one of the preceding claims, wherein component (C) is selected from the group consisting of of aromatic hydrocarbons, (cyclo)aliphatic hydrocarbons, ketones, esters, ethers, ether esters, and carbonates.

10. The mixture according to any one of the preceding claims, wherein component (C) is selected from the group consisting of n-butyl acetate and 1-methoxyprop-2-yl acetate.

11. The mixture according to any one of the preceding claims, wherein components (B) and (C) are present in a volume ratio of 100:1 to 1:1.

12. The use of a mixture according to any one of claims 1 to 11 in coating compositions for one-component or two-component polyurethane coating materials, for primers, surfacers, basecoats, unpigmented topcoats, pigmented topcoats, and clearcoats in the sector of industrial coating, aircraft coating or large-vehicle coating, wood coating, automotive finishing, OEM coating or automotive refinish, or decorative coating.

13. The use of p-cymene (B), if appropriate in a mixture of at least one further solvent other than (B), as solvent for polyisocyanates obtainable by reacting at least one monomeric isocyanate.

14. A coating composition for one-component or two-component polyurethane coating materials, for primers, surfacers, basecoats, unpigmented topcoats, pigmented topcoats, and clearcoats in the sector of industrial coating, aircraft coating or large-vehicle coating, wood coating, automotive finishing, OEM coating or automotive refinish, or decorative coating, comprising a mixture according to any one of claims 1 to 11.

## Patentansprüche

1. Gemisch, enthaltend
- (A) mindestens ein Polyisocyanat, das durch Umsetzung mindestens eines monomeren Isocyanats erhältlich ist,
- (B) p-Cymol,
- (C) gegebenenfalls mindestens ein weiteres Lösungsmittel, das ein anderes als (B) ist,
- (D) gegebenenfalls mindestens eine Lewis-saure organische Metallverbindung, die in der Lage ist, die Reaktion von Isocyanatgruppen mit Isocyanat-reaktiven Gruppen zu beschleunigen, und
- (E) gegebenenfalls andere Lackadditive.

2. Gemisch nach Anspruch 1, wobei es sich bei dem monomeren Isocyanat um ein Diisocyanat handelt, das aus der Gruppe bestehend aus Hexamethylen-1,6-diisocyanat, Pentamethylen-1,5-diisocyanat, Isophorondiisocyanat, 1,3-Bis(isocyanatomethyl)cyclohexan, 4,4'-Di(isocyanatocyclohexyl)methan und 2,4'-Di(isocyanatocyclohexyl)methan ausgewählt ist.

3. Gemisch nach einem der vorhergehenden Ansprüche, wobei es sich bei dem Polyisocyanat (A) um ein Isocyanuratgruppen, asymmetrische Isocyanuratgruppen, Biuret(/Urethan)-Gruppen und/oder Allophanate, vorzugsweise Biuretgruppen und/oder Gemische von Isocyanuraten und asymmetrischen Isocyanuraten, aufweisendes Polyisocyanat handelt.

4. Gemisch nach einem der vorhergehenden Ansprüche, wobei das Polyisocyanat (A) Isocyanurat-, Urethan- und/oder Allophanatgruppen enthält, die unter Verwendung eines Ammoniumcarboxylat- oder Ammonium-α-hydroxycarboxylat-Katalysators hergestellt wurden.

5. Gemisch nach einem der vorhergehenden Ansprüche, wobei es sich bei dem Polyisocyanat um ein (asymmetrische) Isocyanuratgruppen enthaltendes Polyisocyanat mit einer Viskosität von 600-4000 mPa*s und/oder ein niederviskoses Urethan und/oder Allophanat mit einer Viskosität von 150-1600 mPa*s handelt.

6. Gemisch nach einem der vorhergehenden Ansprüche, wobei die Menge von Komponente (A) in dem Gemisch zwischen 50 bis 98 Gew.-%, bezogen auf die Summe von Polyisocyanat und Lösungsmittel, liegt.

7. Gemisch nach einem der vorhergehenden Ansprüche, wobei die Menge von p-Cymol (B) in dem Gemisch zwischen 2 und 50 Gew.-%, bezogen auf die Summe von Polyisocyanat und Lösungsmittel, vorzugsweise zwischen 5 und 40 Gew.-%, weiter bevorzugt zwischen 10 und 30 Gew.-%, liegt.

8. Gemisch nach einem der vorhergehenden Ansprüche, wobei das p-Cymol (B) ein ¹⁴C: ¹²C-Isotopenverhältnis von 0,5 × 10⁻¹² bis 5 × 10⁻¹² aufweist.

9. Gemisch nach einem der vorhergehenden Ansprüche, wobei Komponente (C) aus der Gruppe bestehend aus aromatischen Kohlenwasserstoffen, (cyclo)aliphatischen Kohlenwasserstoffen, Ketonen, Estern, Ethern, Etherestern und Carbonaten ausgewählt ist.

10. Gemisch nach einem der vorhergehenden Ansprüche, wobei Komponente(C) aus der Gruppe bestehend aus n-Butylacetat und 1-Methoxyprop-2-ylacetat ausgewählt ist.

11. Gemisch nach einem der vorhergehenden Ansprüche, wobei die Komponenten (B) und (C) in einem Volumenverhältnis von 100:1 bis 1:1 vorliegen.

12. Verwendung eines Gemischs nach einem der Ansprüche 1 bis 11 in Beschichtungsmitteln für 1K- oder 2K-Polyurethanlacke, für Grundierungen, Füller, Basislacke, unpigmentierte Decklacke, pigmentierte Decklacke und Klarlacke im Bereich der Industrie-, Flugzeug- oder Fahrzeuglackierung, Holz-, Auto-, OEM- oder Autoreparaturlackierung oder Dekolackierung.

13. Verwendung von p-Cymol (B), gegebenenfalls im Gemisch mit mindestens einem weiteren Lösungsmittel, das ein anderes als (B) ist, als Lösungsmittel für Polyisocyanate, die durch Umsetzung mindestens eines monomeren Isocyanats erhältlich sind.

14. Beschichtungsmittel für 1K- oder 2K-Polyurethanlacke, für Grundierungen, Füller, Basislacke, unpigmentierte Decklacke, pigmentierte Decklacke und Klarlacke im Bereich der Industrie-, Flugzeug- oder Fahrzeuglackierung, Holz-, Auto-, OEM- oder Autoreparaturlackierung oder Dekolackierung, enthaltend ein Gemisch nach einem der Ansprüche 1 bis 11.

## Revendications

1. Mélange comprenant
- (A) au moins un polyisocyanate pouvant être obtenu par réaction d'au moins un isocyanate monomère,
- (B) du p-cymène,
- (C) éventuellement au moins un solvant supplémentaire autre que (B),
- (D) éventuellement au moins un composé organométallique acide de Lewis permettant d'accélérer la réaction des groupes isocyanate avec des groupes réactifs aux isocyanates, et
- (E) éventuellement d'autres additifs de revêtement.

2. Mélange selon la revendication 1, dans lequel l'isocyanate monomère est un diisocyanate choisi dans le groupe constitué par le 1,6-diisocyanate d'hexaméthylène, le 1,5-diisocyanate de pentaméthylène, le diisocyanate d'isophorone, le 1,3-bis(isocyanatométhyl)cyclohexane, le 4,4'-di(isocyanatocyclohexyl)méthane et le 2,4'-di(isocyanatocyclohexyl)méthane.

3. Mélange selon l'une quelconque des revendications précédentes, dans lequel le polyisocyanate (A) est un polyisocyanate contenant des groupes isocyanurate, des groupes isocyanurate asymétriques, des groupes biuret (/uréthane) et/ou des allophanates, de préférence des groupes biuret et/ou des mélanges d'isocyanurates et d'isocyanurates asymétriques.

4. Mélange selon l'une quelconque des revendications précédentes, dans lequel le polyisocyanate (A) comprend des groupes isocyanurate, uréthane et/ou allophanate préparés à l'aide d'un catalyseur à base de carboxylate d'ammonium ou de α-hydroxycarboxylate d'ammonium.

5. Mélange selon l'une quelconque des revendications précédentes, dans lequel le polyisocyanate comprend un polyisocyanate comprenant des groupes isocyanurate (asymétriques), ayant une viscosité de 600 à 4 000 mPa*s, et/ou un uréthane et/ou un allophanate de faible viscosité ayant une viscosité de 150 à 1 600 mPa*s.

6. Mélange selon l'une quelconque des revendications précédentes, dans lequel la quantité de composant (A) dans le mélange est comprise entre 50 % et 98 % en poids, par rapport à la somme du polyisocyanate et du solvant.

7. Mélange selon l'une quelconque des revendications précédentes, dans lequel la quantité de p-cymène (B) dans le mélange est comprise entre 2 % et 50 % en poids, par rapport à la somme du polyisocyanate et du solvant, de préférence entre 5 % et 40 %, et plus préférablement entre 10 % et 30 %.

8. Mélange selon l'une quelconque des revendications précédentes, dans lequel le p-cymène (B) présente un rapport isotopique ¹⁴C : ¹²C de 0,5 × 10⁻¹² à 5 × 10⁻¹².

9. Mélange selon l'une quelconque des revendications précédentes, dans lequel le composant (C) est choisi dans le groupe constitué par des hydrocarbures aromatiques, des hydrocarbures (cyclo)aliphatiques, des cétones, des esters, des éthers, des éthers-esters et des carbonates.

10. Mélange selon l'une quelconque des revendications précédentes, dans lequel le composant (C) est choisi dans le groupe constitué par l'acétate de n-butyle et l'acétate de 1-méthoxyprop-2-yle.

11. Mélange selon l'une quelconque des revendications précédentes, dans lequel les composants (B) et (C) sont présents dans un rapport volumique de 100:1 à 1:1.

12. Utilisation d'un mélange selon l'une quelconque des revendications 1 à 11 dans des compositions de revêtement pour des matériaux de revêtement de polyuréthane à un composant ou à deux composants, pour apprêts, apprêts surfaçants, couches de base, couches de finition non pigmentées, couches de finition pigmentées et vernis transparents dans le secteur des revêtements industriels, des revêtements pour aéronefs ou des revêtements pour véhicules lourds, des revêtements pour bois, des finitions automobiles, des revêtements OEM ou de la réparation automobile, ou des revêtements décoratifs.

13. Utilisation de p-cymène (B), le cas échéant en mélange avec au moins un solvant supplémentaire autre que (B), en tant que solvant pour des polyisocyanates obtenus par réaction d'au moins un isocyanate monomère.

14. Composition de revêtement pour des matériaux de revêtement de polyuréthane à un composant ou à deux composants, pour apprêts, apprêts surfaçants, couches de base, couches de finition non pigmentées, couches de finition pigmentées et vernis transparents dans le secteur des revêtements industriels, des revêtements pour aéronefs ou des revêtements pour véhicules lourds, des revêtements pour bois, des finitions automobiles, des revêtements OEM ou de la réparation automobile, ou des revêtements décoratifs, comprenant un mélange selon l'une quelconque des revendications 1 à 11.
